# EUROPÄISCHE PATENTSCHRIFT

(11) **EP 3 384 500 B1**
(45) Veröffentlichungstag und Bekanntmachung des Hinweises auf die Patenterteilung: **01.07.2020**
(21) Anmeldenummer: 16800934.8
(22) Anmeldetag: 22.11.2016
(51) Int. Cl.: G21C 17/022, C23F 11/08, C23F 11/12

(54) **KERNKRAFTWERK UND VERFAHREN ZUM BETREIBEN EINES KERNKRAFTWERKS**
NUCLEAR POWER PLANT AND METHOD FOR OPERATING A NUCLEAR POWER PLANT
CENTRALE NUCLÉAIRE ET PROCÉDÉ DE FONCTIONNEMENT D'UNE CENTRALE NUCLAIRE

(30) Priorität: 30.11.2015 DE 102015120722
(43) Veröffentlichungstag der Anmeldung: 10.10.2018
(73) Patentinhaber: Framatome GmbH, 91052 Erlangen (DE)
(72) Erfinder: STELLWAG, Bernhard, 90482 Nürnberg (DE); FANDRICH, Jörg, 90587 Obermichelbach (DE)
(74) Vertreter: Lavoix
(86) Internationale Anmeldenummer: PCT/EP2016/078434
(87) Internationale Veröffentlichungsnummer: WO 2017/093079

(56) Entgegenhaltungen:
- US-A1- 2010 300 218

## Beschreibung

Die Erfindung betrifft ein Kernkraftwerk mit einem Primärkühlmittelkreislauf und einem von dem Primärkühlmittelkreislauf getrennten Dampf-Wasser-Kreislauf. Die Erfindung betrifft des Weiteren ein Verfahren zum Betreiben eines solchen Kernkraftwerks.

Kernkraftwerke mit einem Primärkühlmittelkreislauf und einem von dem Primärkühlmittelkreislauf getrennten Dampf-Wasser-Kreislauf sind bekannt. Diese werden insbesondere mit Druckwasserreaktoren oder Schwerwasserreaktoren betrieben. Die Dampferzeuger von Kernkraftwerken müssen wegen ihrer Konstruktion und aufgrund der verwendeten Werkstoffe unter reduzierenden Bedingungen betrieben werden. Auch beim Stillstand der Anlagen ist ein Korrosionsschutz der Werkstoffe auf der Sekundärseite der Dampferzeuger durch reduzierende Bedingungen erforderlich. Dies wird auch als Stillstandskonservierung bezeichnet. Für beide Aufgaben wird Hydrazin als Reduktionsmittel eingesetzt.

Beim Leistungsbetrieb von Kernkraftwerken bewirkt Hydrazin im Dampf-Wasser-Kreislauf von Kernkraftwerken die folgenden Reaktionen:
- Sauerstoffbindung durch die Reaktion N₂H₄ + O₂ → N₂ + 2 H₂O. Die Entfernung des Oxidationsmittels O₂ und gegebenenfalls anderer Oxidantien, wie Kupferionen, erleichtert die Einstellung reduzierender Bedingungen.
- Reduzierende Bedingungen durch die zusätzliche elektrochemische Hydrazinoxidation auf den Bauteiloberflächen gemäß der Reaktion N₂H₄ + 4 OH⁻ → N₂ + 4 H₂O + 4 e⁻. Das Gleichgewichtselektrodenpotential dieser Reaktion beträgt unter Standardbedingungen -330 mV gegen die Wasserstoffelektrode.

Die Reaktionen mit Hydrazin sind thermisch aktiviert. Dies bewirkt, dass schon im Kondensat- und Speisewassersystem von Leicht- und Schwerwasserreaktoren ein allmählicher Übergang von oxidierenden zu reduzierenden Bedingungen stattfindet. Bei Eintritt des Speisewassers in die Dampferzeuger und im Umlaufwasser auf der Sekundärseite der Dampferzeuger reagiert Hydrazin dann mit so hoher Geschwindigkeit, dass reduzierende Bedingungen sichergestellt sind.

Bei mit konventionellen Energieträgern betriebenen Kraftwerken werden durch geringe Mengen Sauerstoff gezielt oxidierende Bedingungen im Kondensat- und Speisewassersystem eingestellt. Durch diese Maßnahme wird die Eisenabgabe der Komponenten und damit auch der Eintrag von Korrosionsprodukten in die Dampfkessel verringert. Im VGB-Standard für die Speisewasser-, Kesselwasser- und Dampfqualität für Industriekraftwerke (VGB-S-010-T-00; 2011-12.DE) wird von den spezifizierten AVT-Fahrweisen (AVT = All Volatile Treatment) deshalb nur die AVT(O)-Fahrweise empfohlen, bei der nur mit Ammoniak, ohne Zugabe von Reduktionsmitteln, konditioniert wird. Die AVT(R)-Fahrweisen, bei denen zusätzlich ein flüchtiges Reduktionsmittel als Sauerstoffbindemittel zudosiert wird, sollten nach diesem Standard nur in Ausnahmefällen eingesetzt werden.

Hydrazin ist ein sehr gutes Sauerstoffbindemittel. Der bekannte Betrieb des sekundären Dampf-Wasser-Kreislaufs von Druckwasserreaktoren durch Zusatz von Hydrazin als Reduktionsmittel entspricht damit einer AVT(R)-Fahrweise. Die genaue Einregelung des Sauerstoffgehaltes in den Kreislaufsystemen und damit eine AVT(O)-Konditionierung der Dampf- Wasser-Kreislaufsysteme von Leicht- und Schwerwasserreaktoren ist bei hydrazinhaltigen Medien nicht möglich. Zusätzlich kann Hydrazin als starkes Reduktionsmittel die Erosionskorrosion in den Kreislaufsystemen verstärken.

Einige Anlagen umgehen die Verwendung von Hydrazin durch Verwendung von Carbohydrazid. Carbohydrazid weist ähnliche Eigenschaften wie Hydrazin auf und ist ebenfalls ein starkes Reduktionsmittel.

Aus der EP 2 193 524 B1 ist ein Kernkraftwerk mit einem Siedewasserreaktor bekannt, in dessen Reaktorkühlsystem zusätzlich zu Hydrazin ein Alkohol als Reduktionsmittel zum Einsatz kommt. Die Alkoholinjektion erfolgt im Primärkühlmittelkreislauf, der auch den Reaktorkern durchläuft.

In der DE 100 30 726 B4 ist ein Verfahren zur Unterdrückung von Korrosion in Reaktorbauteilen gezeigt, bei dem eine fotokatalytische Substanz eingesetzt wird, die sich auf der Oberfläche von Reaktorbauteilen ablagert und diese vor Korrosion schützt. Durch ein Speisewassersystem kann Wasserstoff oder Methanol in das Reaktorwasser des Primärkühlmittelkreislaufs injiziert werden.

In beiden Fällen handelt es sich um Methoden zur Kühlwasserbehandlung in Siedewasserreaktoren, die sich dadurch auszeichnen, dass im gesamten Primärkühlmittelkreislauf ein hohes Gammastrahlungsfeld herrscht. Damit unterscheiden sich Siedewasserreaktoren grundsätzlich von Druckwasserreaktoren oder Schwerwasserreaktoren, die einen von dem Primärkühlmittelkreislauf getrennten Dampf-Wasser-Kreislauf und einen an den Primärkühlmittelkreislauf und den Dampf-Wasser-Kreislauf angeschlossenen Dampferzeuger zur Übertragung von Wärme aus dem Primärkühlmittelkreislauf in den Dampf-Wasser-Kreislauf aufweisen.

Die WO 00/46423 A betrifft eine Reinigungsmittelzusammensetzung und Verfahren zum Entfernen von Ablagerungen aus Dampferzeugern von Kernkraftwerken mit Druckwasserreaktoren. Die wässrige Zusammensetzung enthält 1-Hydroxyethyliden-1,1-diphosphonsäure und wenigstens ein ethoxyliertes Mercaptan oder oxidiertes ethoxyliertes Mercaptan. Zusammen mit der Reinigungsmittelzusammensetzung können weitere Chemikalien in den Sekundärkreislauf des Druckwasserreaktors eingespeist werden, darunter Reduktionsmittel wie Ascorbinsäure, Hydrochinon, Natriumsulfit, Diethylhydroxyamin, Hydrazin, Isoascorbinsäure oder Carbohydrazid.

Aufgabe der Erfindung ist es, einen wirksamen und anwenderfreundlichen Korrosionsschutz im sekundären Dampf-Wasser-Kreislauf eines Kernreaktors bereitzustellen, insbesondere eines Druckwasserreaktors oder Schwerwasserreaktors, ohne Rückgriff auf toxische Reduktionsmittel wie Hydrazin.

Zur Lösung der Aufgabe ist ein Kernkraftwerk mit einem Primärkühlmittelkreislauf vorgesehen, mit einem von dem Primärkühlmittelkreislauf getrennten Dampf-Wasser-Kreislauf, und einem an den Primärkühlmittelkreislauf und den Dampf-Wasser-Kreislauf angeschlossenen Dampferzeuger zur Übertragung von Wärme aus dem Primärkühlmittelkreislauf in den Dampf-Wasser-Kreislauf. Der Dampf-Wasser-Kreislauf weist wenigstens eine Dosierstelle zum Eintragen eines Reduktionsmittels in den Dampf-Wasser-Kreislauf auf, wobei das Reduktionsmittel eine aus Kohlenstoff, Wasserstoff und Sauerstoff bestehende organische Verbindung ist, und Mittel zur Steuerung der Konzentration des Reduktionsmittels, durch die im Dampf-Wasser-Kreislauf eine vorbestimmte Sauerstoffkonzentration eingestellt wird, während innerhalb des Dampferzeugers (18) reduzierende Bedingungen herrschen.

Die Erfinder haben erkannt, dass alternative Reduktionsmittel erstens die genaue Einstellung von geringen Mengen Sauerstoff in den Kreislaufsystemen ermöglichen müssen, um in den Einrichtungen des Dampf-Wasser-Kreislaufs außerhalb des Dampferzeugers einen für Industriekraftwerke empfohlenen AVT(O)-Betrieb zu gewährleisten. Zweitens müssen sie reduzierende Bedingungen im Umlaufwasser von nuklearen Dampferzeugern sicherstellen, da die im Dampferzeuger verwendeten Werkstoffe, insbesondere Nickellegierungen, durch einen AVT(O)-Betrieb korrosiv angegriffen werden können. Insgesamt sollten die alternativen Reduktionsmittel möglichst die folgenden chemischen Eigenschaften aufweisen:
- Keine O₂- Bindung in den Dampf-Wasser-Kreislaufsystemen, aber im Umlaufwassersystem von nuklearen Dampferzeugern;
- Keine starke elektrochemische Reduktionswirkung in Dampf-Wasser-Kreislaufsystemen, mit Ausnahme der nuklearen Dampferzeuger;
- Keine Belastung und vorzeitige Erschöpfung der Kapazität der Anionen- und Kationenaustauscherharze in der Kondensatreinigungsanlage und in der Dampferzeuger-Abschlämmentsalzung; und
- Keine kanzerogene, toxische oder andere chemische Eigenschaften, die den Umgang mit dem Reduktionsmittel im Kernkraftwerk sehr stark beeinträchtigen würden.

Anstelle von Hydrazin oder anderen starken Sauerstoffbinde- und Reduktionsmittel werden niedermolekulare und stickstofffreie C, H, O-Verbindungen in den sekundären Dampf-Wasser-Kreislauf des Leicht- oder Schwerwasserreaktors dosiert. Niedermolekular bedeutet hier ein Molekulargewicht von unter 800 g/mol, bevorzugt unter 400 g/mol. Das im Inneren des nuklearen Dampferzeugers auf der Sekundärseite vorhandene Strahlungsfeld ist ausreichend, damit im Umlaufwasser die folgenden chemischen Reaktionen induziert werden:
- Sauerstoffbindung: zum Beispiel bei Methanol durch die Reaktion CH₃OH + 3/2 O₂ →CO₂ + 2 H₂O;
- Hohe Reduktionswirkung: Das Zellenpotential für die elektrochemische Methanoloxidation zu CO₂ gemäß der Reaktion CH₃OH + H₂O → CO₂ + 6 H⁺ + 6 e⁻ beträgt unter Standardbedingungen +20 mV gegen die Wasserstoffelektrode.

Niedermolekulare C, H, O-Verbindungen bewirken also ebenfalls stark reduzierende Bedingungen im Inneren der nuklearen Dampferzeuger. Die Verwendung von niedermolekularen und stickstofffreien C, H, O-Verbindungen ermöglicht auf diese Weise die gezielte Einstellung reduzierender Bedingungen im nuklearen Dampferzeuger, wodurch die Verwendung von Hydrazin nicht mehr erforderlich ist. Im sekundären Dampf-Wasser-Kreislaufsystem außerhalb des nuklearen Dampferzeugers sind die C, H, O-Verbindungen gegenüber Sauerstoff weitgehend inaktiv, so dass dort die Einstellung oxidativer Bedingungen möglich ist.

Gemäß einer vorteilhaften Ausführungsform wirkt das Reduktionsmittel unter Einwirkung von Gammastrahlung als Sauerstofffänger. Indem die Reduktionsreaktionen erst durch die im Dampferzeuger herrschende Gammastrahlung induziert werden, kann der Sauerstoffgehalt im Dampf-Wasser-Kreislauf genau eingeregelt werden und ermöglicht so eine AVT(O)-Fahrweise im Dampf-Wasser-Kreislauf des Leicht- oder Schwerwasserreaktors. Konsequenz der AVT(O)-Fahrweise in der Anlage wiederum ist, dass die Alkalisierung mit Ammoniak oder anderen organischen Aminen ausreicht, um niedrige Eisenabgaben und ausreichende Erosionskorrosionsbeständigkeit im Kreislaufsystem sicherzustellen. Bevorzugt kann die Konditionierung des Dampf-Wasser-Kreislaufsystems nur mit Ammoniak, ohne Zusatz von organischen Aminen, erfolgen.

Gemäß einer weiteren vorteilhaften Ausführungsform ist das Reduktionsmittel aus der Gruppe bestehend aus C1-C6-Alkoholen, Aldehyden und Ketonen oder deren Mischungen ausgewählt. Der Vorteil dieser flüchtigen, niedermolekularen C, H, O-Verbindungen ist, dass sie nicht in den Wassereinigungsanlagen, beispielsweise in der Kondensatreinigungsanlage oder Abschlämmentsalzung, entfernt werden, wie dies bei herkömmlichen Reduktionsmittel, wie beispielsweise Hydrazin, der Fall ist. Sie können also auch vor den Wasserreinigungsanlagen in das System eingespeist werden, wodurch sich die Zahl möglicher Dosierstellen in der Anlage erhöht.

In einer besonders vorteilhaften Ausführungsform ist das Reduktionsmittel ein C1-C6-Alkohol, vorzugsweise Propanol, Ethanol oder Methanol, besonders bevorzugt Methanol. Die Alkohole haben den Vorteil, dass sie im Vergleich zu vielen anderen Reduktionsmitteln keine Gefahr für die Umwelt darstellen und somit ein sicherer Umgang mit geringem Aufwand möglich ist. Sie lassen sich leicht transportieren, lagern und handhaben.

In einer weiteren vorteilhaften Ausführungsform weist der Dampf-Wasser-Kreislauf einen Kondensator und eine Hauptkondensatpumpe auf. Ferner ist die Dosierstelle zwischen dem Kondensator und der Hauptkondensatpumpe angeordnet. Der Kondensator dient dazu, kondensierten Wasserdampf wieder dem Dampf-Wasser-Kreislauf zuzuführen, und senkt auf diese Weise den Wasserverbrauch der Anlage. Die Anordnung der Dosierstelle nach dem Kondensator ermöglicht es, die Qualität des Kondensats zu prüfen, bevor das Reduktionsmittel zudosiert wird.

Gemäß einer bevorzugten Ausführungsform weist der Dampf-Wasser-Kreislauf einen Speisewasserbehälter auf. Ferner ist die Dosierstelle stromabwärts des Speisewasserbehälters angeordnet. Im Speisewasserbehälter wird das Speisewasser vorgehalten, das zur Versorgung des Dampferzeugers und zum Ausgleich des dem System entzogenen Wassers genutzt wird. Da ein Teil des Reduktionsmittels durch Ausgasen im Speisewasserbehälter wieder entfernt wird, ist es vorteilhaft, das Reduktionsmittel zwischen dem Speisewasserbehälter und den Speisewasserpumpen in den Dampf-Wasser-Kreislauf einzutragen. Die Anordnung der Dosierstelle nach dem Speisewasserbehälter ermöglicht es darüber hinaus, die Qualität des Speisewassers zu prüfen, bevor das Reduktionsmittel zudosiert wird. Alternativ zum Speisewasserbehälter kann auch eine Einspeisevorrichtung für Speisewasser an den Dampf-Wasser-Kreislauf angeschlossen sein.

Gemäß einer weiteren bevorzugten Ausführungsform ist im Dampf-Wasser-Kreislauf wenigstens eine Einrichtung zur Messung der Reduktionsmittelkonzentration und/oder des Redox-Potentials vorgesehen. Die Messungen dienen dazu, die Wasserqualität im Dampf-Wasser-Kreislauf zu überwachen und die gewünschten Bedingungen einzuregeln, d.h. Einstellung eines niedrigen vorbestimmten Sauerstoffgehalts im Kreislaufsystem und Sicherstellen von reduzierenden Bedingungen im Umlaufwasser des Dampferzeugers.

Reduzierende Bedingungen bedeuten, dass das Redoxpotential des jeweiligen Mediums, hier des Umlaufwassers bei Betriebstemperatur, gegen die Wasserstoffelektrode unter Standardbedingungen (Reduktions-Halbzellenpotential) weniger als 0 V, vorzugsweise weniger als -10 mV beträgt.

Gegenstand der Erfindung ist ferner ein Verfahren zum Betreiben eines Kernkraftwerks mit einem Primärkühlmittelkreislauf, einem von dem Primärkühlmittelkreislauf getrennten Dampf-Wasser-Kreislauf, und einem an den Primärkühlmittelkreislauf und den Dampf-Wasser-Kreislauf angeschlossenen Dampferzeuger zur Übertragung von Wärme aus dem Primärkühlmittelkreislauf in den Dampf-Wasser-Kreislauf. Ein aus Kohlenstoff, Wasserstoff und Sauerstoff bestehendes organisches Reduktionsmittel wird in den Dampf-Wasser-Kreislauf eingetragen, wobei die Konzentration des Reduktionsmittels so gesteuert wird, dass im Dampf-Wasser-Kreislauf eine vorbestimmte Sauerstoffkonzentration von vorzugsweise höchstens 0,1 mg/kg eingestellt wird, während innerhalb des Dampferzeugers reduzierende Bedingungen herrschen.

Das Begrenzen der Sauerstoffkonzentration im Dampf-Wasser-Kreislauf ermöglicht die AVT(O)-Fahrweise des Dampf-Wasser-Kreislaufs und stellt auf diese Weise eine ausreichende Erosionskorrosionsbeständigkeit im Dampf-Wasser-Kreislauf sicher. Beispielsweise bilden sich auf Stahloberflächen Hämatit- und auf kupferhaltigen Oberflächen Kupfer(I)-oxid-Schutzschichten, welche die Korrosionsrate dieser Werkstoffe reduzieren. Gleichzeitig ermöglicht die im Dampferzeuger herrschende Gammastrahlung dort eine AVT(R)-Fahrweise, die den notwendigen Korrosionsschutz der Bauteile im Dampferzeuger sicherstellt.

Gemäß einer vorteilhaften Ausführungsform wird im Dampf-Wasser-Kreislauf ein pH-Wert von größer als 7 eingestellt, besonders bevorzugt größer 8,5. Da die Löslichkeit von Eisenoxiden bei einem hohen pH-Wert verringert ist, werden Stahloberflächen im Dampf-Wasser-Kreislauf durch diese Maßnahme zusätzlich vor Korrosion geschützt.

Gemäß einer weiteren vorteilhaften Ausführungsform erfolgt eine kontinuierliche Messung der Reduktionsmittelkonzentration. Hierdurch ist eine sehr genaue Prozessüberwachung und -steuerung möglich, was zu Kosteneinsparungen führt.

In einer bevorzugten Ausführungsform wird der Reduktionsmittelverbrauch im Dampferzeuger kontinuierlich bestimmt. Auf diese Weise können Rückschlüsse auf die Bedingungen im Dampf-Wasser-Kreislauf gezogen werden, was eine sichere Überwachung des Systems ermöglicht.

In einer weiteren bevorzugten Ausführungsform umfasst der Dampf-Wasser-Kreislauf einen Speisewasserabschnitt und einen Hauptkondensatabschnitt, wobei der Sauerstoffgehalt im Hauptkondensat und/oder im Speisewasser analysiert und als Regelgröße für die Reduktionsmittelkonzentration verwendet wird. Hierdurch wird die Wasserqualität überwacht sowie konstante Bedingungen im Dampf-Wasser-Kreislauf sichergestellt. Die Konzentration des Reduktionsmittels im Speisewasser liegt vorzugsweise im Bereich von 10E-6 mol/kg bis 10E-3 mol/kg. Bei Verwendung von Methanol als Reduktionsmittel entsprechen diese Konzentrationen einem Bereich von etwa 10 µg/kg bis 35 mg/kg.

Gemäß einer bevorzugten Ausführungsform weist der Dampferzeuger einen Umlaufraum auf, in dem Umlaufwasser zur Aufnahme von Wärme aus dem Primärkühlmittelkreislauf zirkuliert. Der Umlaufraum umfasst den Zwischenraum, der durch das Dampferzeugergehäuse und dem die Einrichtungen zur Wärmeübertragung umgebenden Mantel gebildet wird. Die Konzentration des Reduktionsmittels im Umlaufwasser liegt vorzugsweise im Bereich von 10E-7 mol/kg bis 10E-3 mol/kg, bevorzugt 3x10E-7 mol/kg bis 3x10E-4 mol/kg. Bei Verwendung von Methanol entsprechen diese Werte etwa 1 µg/kg bis 35 mg/kg bzw. 3 bis 10 mg/kg. Die Einstellung der Reduktionsmittelkonzentration in diesem Bereich garantiert, dass während des Betriebs der Anlage stets reduzierende Bedingungen im Dampferzeuger gewährleistet sind.

Gemäß einer bevorzugten Ausführungsform weist der Dampf-Wasser-Kreislauf einen Speisewasserabschnitt mit einem Speisewasserzulauf auf und der Dampferzeuger umfasst einen Umlaufraum, in dem Umlaufwasser zur Aufnahme von Wärme aus dem Primärkühlmittelkreislauf zirkuliert, wobei die Reduktionsmittelkonzentration mit TOC-Durchflussmessgeräten (TOC = Total Organic Carbon) im Speisewasser und zusätzlich oder alternativ im Umlaufwasser bestimmt wird. Durch Bestimmung der Reduktionsmittelkonzentration lässt sich die Dosierung des Reduktionsmittels regeln und erlaubt eine kontinuierliche Überwachung des Systems.

In einer vorteilhaften Ausführungsform umfasst der Dampf-Wasser-Kreislauf einen Umlaufraum, wobei mittels eines Potentialmessfühlers im Umlaufwasser des Dampferzeugers das Redox- und/oder Korrosionspotential gemessen wird. Das Korrosionspotential ist als das Elektrodenpotential des Werkstoffs im Kontakt mit dem umgebenden Medium gegenüber einer handelsüblichen Referenzelektrode, zum Beispiel einer Ag/AgCl-Elektrode definiert. Indem die Wasserqualität im Umlaufwasser überwacht wird, können gezielt reduzierende Bedingungen im Umlaufwasser des Dampferzeugers eingestellt und aufrecht erhalten werden.

In einer weiteren vorteilhaften Ausführungsform umfasst der Dampf-Wasser-Kreislauf einen Umlaufraum, wobei das Redoxpotential im Umlaufwasser kontinuierlich gemessen und als Regelgröße für die Reduktionsmitteldosierung verwendet wird. Auf diese Weise lassen sich betriebsbedingte Schwankungen in der Reduktionsmittelkonzentration gezielt ausgleichen und so definierte Bedingungen sicherstellen.

Gemäß einer bevorzugten Ausführungsform ist vorgesehen, dass das Redox- und/oder Korrosionspotential zur Einregelung oxidierender Bedingungen im Dampf-Wasser-Kreislauf und gleichzeitig das Redox- und/oder Korrosionspotential im Umlaufwasser des Dampferzeugers gemessen wird, um reduzierende Bedingungen in Dampferzeuger einzuregeln und sicherzustellen. Oxidierende Bedingungen bedeuten, dass das Redoxpotential des jeweiligen Mediums bei Betriebstemperatur mehr als 0 V, vorzugsweise mehr als 10 mV beträgt, gemessen gegen die Wasserstoffelektrode unter Standardbedingungen, wobei eine vorbestimmte Sauerstoffkonzentration im Medium, vorzugsweise 0,1 mg/kg, nicht überschritten werden soll. Auf diese Weise kann der gleichzeitige Betrieb des Dampferzeugers unter AVT(R)-Bedingungen und des Dampf-Wasser-Kreislaufs unter AVT(O)- Bedingungen im gleichen Kreislauf mit einem gemeinsamen Kühlmittel überwacht und gesteuert werden.

Gegenstand der Erfindung ist ferner eine Verwendung des beschriebenen Verfahrens zur Stillstandskonservierung des Dampferzeugers, wobei die Konzentration des Reduktionsmittels auf der Sekundärseite 5 x 10E-6 bis 5 x 10E-2 mol/kg beträgt, entsprechend etwa 30 µg/kg bis 1000 mg/kg Methanol. In nuklearen Dampferzeugern sind auch bei Stillstand der Reaktoren hohe Strahlungsfelder vorhanden. Hierdurch eignen sich niedermolekulare C, H, O-Verbindungen (M < 800 g/mol) auch zur Stillstandskonservierung, da die notwendigen Gammastrahlen in ausreichender Menge vorhanden sind, damit die C, H, O- Verbindungen auf der Sekundärseite der nuklearen Dampferzeuger als Sauerstofffänger wirken können.

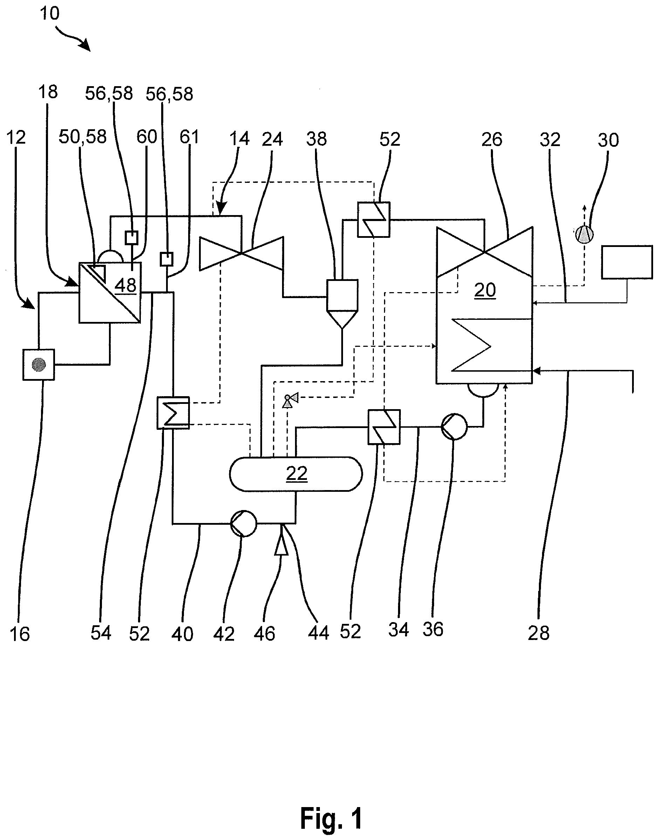

Weitere Vorteile und Merkmale ergeben sich aus der nachfolgenden Beschreibung in Verbindung mit der beigefügten Zeichnung, die jedoch nicht in einem einschränkenden Sinn verstanden werden soll. Die einzige Figur zeigt:
- eine schematische Ansicht eines vereinfachten Dampf- Wasser-Kreislaufs in einem erfindungsgemäßen Kernkraftwerk.

In der einzigen Figur ist ein Kernkraftwerk 10 mit einem Primärkühlmittelkreislauf 12 und einem davon getrennten Dampf-Wasser-Kreislauf 14 gezeigt, das einen von dem Primärkühlmittelkreislauf 12 durchströmten Reaktor 16, sowie einen Dampferzeuger 18, einen Kondensator 20 und einen Speisewasserbehälter 22 im Dampf-Wasser-Kreislauf 14 umfasst.

Der Reaktor 16 ist bevorzugt ein Druckwasserreaktor. Die im Reaktor 16 generierte Wärme wird über den Primärkühlmittelkreislauf 12 zum Dampferzeuger 18 transportiert und dort an den Dampf-Wasser-Kreislauf 14 übertragen. Die thermische Energie des heißen Wasserdampfs wird in einer ersten Hochdruckturbine 24 und in einer zweiten Niederdruckturbine 26 in kinetische Energie umgewandelt, die schließlich zum Antreiben von Generatoren (nicht gezeigt) und damit zur Erzeugung von elektrischer Energie genutzt.

Im Kondensator 20 wird der abgekühlte Wasserdampf in seine flüssige Phase überführt und bildet das Hauptkondensat. Hierzu wird der Kondensator 20 durch eine Kühlwasserzuleitung 28 gekühlt und die warmen Abgase werden über eine Abgaspumpe 30 abgeleitet. Verluste werden über eine Ausgleichswasserzuleitung 32 ausgeglichen.

Das Hauptkondensat wird in dem vom Kondensator 20 zum Speisewasserbehälter 22 führenden Hauptkondensatabschnitt 34 über eine Hauptkondensatpumpe 36 in den Speisewasserbehälter 22 gefördert. Im Speisewasserbehälter 22 wird das Hauptkondensat sowie Wasser aus einem Wasserabscheider 38, der zwischen der Hochdruckturbine 24 und der Niederdruckturbine 26 angeordnet ist, gesammelt und für die Zuführung zum Dampferzeuger als Speisewasser vorgehalten.

Das Speisewasser wird im Speisewasserabschnitt 40, der vom Speisewasserbehälter 22 zu einem Speisewasserzulauf 54 am Dampferzeuger führt, mittels einer Speisewasserpumpe 42 zurück in den Dampferzeuger 18 gepumpt, in dem es wieder zur Wärmeaufnahme genutzt wird und sich der sekundäre Dampf-Wasser-Kreislauf 14 schließt. Im Speisewasserabschnitt 40 ist zwischen dem Speisewasserbehälter 22 und der Speisewasserpumpe 42 eine Dosierstelle 44 angeordnet, an der mittels einer Dosiervorrichtung 46 ein aus Kohlenstoff, Wasserstoff und Sauerstoff bestehendes Reduktionsmittel, bevorzugt Methanol, in den Dampf-Wasser-Kreislauf 14 eingetragen wird.

Im Dampferzeuger 18, in dem das Reduktionsmittel unter Einwirkung von Gammastrahlung als Sauerstofffänger wirkt, ist im Umlaufraum 48 eine Einrichtung 50 zur kontinuierlichen Messung der Reduktionsmittelkonzentration sowie des Redox-Potentials vorgesehen. Die Einrichtung 50 umfasst hierzu einen Potentialmessfühler 58.

Alternativ oder ergänzend kann die Reduktionsmittelkonzentration im Umlaufwasser mit einem TOC-Durchflussmessgerät 56 in einer Probenahmeleitung 60, die aus dem Dampferzeuger 18 heraus führt, kontinuierlich gemessen werden. In der Probenahmeleitung 60 herrscht kein Strahlungsfeld, so dass in der Probenahmeleitung 60 keine Konzentrationsänderung von Reduktionsmittel, insbesondere Akloholen, stattfindet.

Ferner kann am Speisewasserzulauf 54 zusätzlich eine Probenahmeleitung 61 vor dem Dampferzeuger 18 vorgesehen sein, um dort Messungen mittels eines TOC-Durchflussmessgeräts 56 und/oder eines Potentialmessfühlers 58 durchzuführen.

Zwischen dem Wasserabscheider 38 und der Niederdruckturbine 26 sowie im Hauptkondensatabschnitt 34 und im Speisewasserabschnitt 40 sind jeweils Zwischenerhitzer 52 angeordnet, die genutzt werden, um abgegebene thermische Energie wieder dem Dampf-Wasser-Kreislauf 14 zuzuführen.

Im Folgenden wird das Verfahren zum Betreiben des Kernkraftwerks 10 am Beispiel einer 1000 MW Anlage unter Verwendung von Methanol als Reduktionsmittel beschrieben.

Für den Anfahr- und Leistungsbetrieb des Reaktors 16 wird im Umlaufwasser des Dampferzeugers eine Methanolkonzentration von 3 µg/kg bis 10 mg/kg eingestellt. Im Speisewasser wird eine um etwa einen Faktor 2 bis 3 höhere Methanolkonzentration angesetzt, um Verluste durch die leichtere Verdampfung von Methanol und Entgasung zu kompensieren.

Für die Stillstandskonservierung ist auf der Sekundärseite eine Methanolkonzentration von 30 µg/kg bis 1000 mg/kg im Dampferzeuger vorgesehen.

Die tägliche Menge von Methanol, die für eine entsprechende Konzentration im Leistungsbetrieb zugeführt werden muss, ist abhängig von der Anlagenleistung und liegt hier im Bereich von 16 kg/d bis 41 kg/d. Bei einem üblichen Tank für Reduktionsmittel mit einem Tankvolumen von 1500 l reicht eine Tankfüllung daher aus, um damit mehrere Wochen Methanol in den Dampf-Wasser-Kreislauf 14 zu fördern, ehe der Tank nachgefüllt werden muss. Die Methanolmengen für eine 1300 MW-Anlage sind wegen der höheren Speisewasserströme um etwa 25 Prozent höher.

Das Einspeisen von Methanol in den Dampf-Wasser-Kreislauf ermöglicht es, oxidative Bedingungen im Dampf-Wasser-Kreislauf 14 außerhalb des Dampferzeugers 18 einzuregeln (AVT(O)-Betrieb), wobei die Sauerstoffkonzentration im Dampf-Wasser-Kreislauf 14 gemäß VGB-Standard unter 0,1 mg/kg gehalten wird.

Ferner wird im Dampf-Wasser-Kreislauf 14 ein pH-Wert von größer als 9,5 eingestellt. Die Einstellung des alkalischen pH-Werts erfolgt bevorzugt mit flüchtigen Stickstoffverbindungen wie Ammoniak und anderen organischen Aminen, besonders bevorzugt mit Ammoniak.

Das Methanol wird bevorzugt nach dem Speisewasserbehälter 22 an der Dosierstelle 44 mittels der Dosiervorrichtung 46 in den Dampf-Wasser-Kreislauf 14 eingebracht, da ein Teil des Methanols durch Entgasung im Speisewasserbehälter 22 verloren geht und auf diese Weise das eingesetzte Methanol effizienter genutzt werden kann.

Bei einem (nicht dargestellten) Ausführungsbeispiel eines Kernkraftwerks 10 ohne Speisewasserbehälter 22 kann es vorteilhaft sein, statt der Dosierstelle 44 eine alternative Dosierstelle zu wählen, beispielsweise direkt vor dem Dampferzeuger 18 oder direkt nach dem Wasserabscheider 38. Auch können mehrere Dosierstellen 44 im Dampf-Wasser-Kreislauf 14 vorgesehen sein. Grundsätzlich ist die am besten geeignete Dosierstelle 44 anlagenspezifisch mit dem Betreiber festzulegen.

Methanol und andere niedermolekulare, aus Kohlenstoff, Wasserstoff und Sauerstoff bestehende, wasserlösliche organische Verbindungen werden in Wassereinigungsanlagen (nicht gezeigt) nicht entfernt, so dass sie auch vor den Wasserreinigungsanlagen in den Dampf-Wasser-Kreislauf 14 eingebracht werden können. Dies bietet einen Vorteil, da hierdurch die Zahl möglicher Dosierstellen 44 im Kernkraftwerk 10 erweitert wird.

Insbesondere können bei Kernkraftwerken 10 vorhandene Dosierstellen 44, die für die Dosierung von Reduktionsmitteln, wie beispielsweise Hydrazin, verwendet wurden, auch für die Einspeisung von Methanol genutzt werden. Bei Verwendung von C, H, O-Verbindungen kann zudem auf die Zugabe von den sogenannten alternativen Aminen, wie beispielsweise Ethanolamin (ETA), Dimethylamin (DMA), Methoxypropylamin (MPA) oder Morpholin, verzichtet werden. Somit können auch diese gegebenenfalls vorhandenen Dosiervorrichtungen 46 genutzt werden, die sich grundsätzlich für die Dosierung von Methanol eignen.

Zur Messung und Einregelung der Konzentration von Methanol im Dampf-Wasser-Kreislauf 14 wird der Sauerstoffgehalt im Hauptkondensat im Hauptkondensatabschnitt 34 und im Speisewasser im Speisewasserabschnitt 40 überwacht. Hierzu werden kontinuierliche Messungen mit handelsüblichen Sensoren mit einer Messgenauigkeit im ppb-Bereich (µg/kg) durchgeführt. Da es sich um ein kontinuierliches Messverfahren handelt, können die Messsignale als Eingangsgröße zur Prozessregelung verwendet werden.

Im Vergleich dazu wird bei der Verwendung von Hydrazin als Reduktionsmittel nach den Verfahren im Stand der Technik die Hydrazinkonzentration im Dampf-Wasser-Kreislauf 14 durch photometrische Messungen bestimmt. Dabei handelt es sich um ein diskontinuierliches Messverfahren, dessen Analysenfrequenz meist eine Woche beträgt. Für den Anfahrbetrieb ist die Hydrazinkonzentration des Umlaufwassers als Messgröße spezifiziert. Beim Leistungsbetrieb ist der Hydrazingehalt des Speisewassers als Überwachungsgröße vorgegeben. Hydrazin muss beim Leistungsbetrieb im Speisewasser gemessen werden, weil die thermische Zersetzung von Hydrazin gemäß der Reaktion 3 N₂H₄ → 4 NH₃ + N₂ im Umlaufwasser mit sehr hoher Geschwindigkeit erfolgt, so dass Messungen im Umlaufwasser keine auswertbaren Ergebnisse mehr ergeben. Selbst bei Messung der Hydrazinkonzentration im Speisewasser treten aufgrund des thermischen Abbaus von Hydrazin im Zeitraum zwischen Entnahme der Probe und Durchführung der Messung erhebliche Messwertschwankungen auf.

Eine kontinuierliche Prozessüberwachung und gegebenenfalls Steuerung der Konzentration des Reduktionsmittels im Speisewasser ist aus den genannten Gründen bei der Verwendung von Hydrazin nicht möglich. Deshalb werden meist Hydrazinkonzentrationen eingestellt, die auch bei betriebsbedingten Zunahmen des Sauerstoffgehalts im Dampf-Wasser-Kreislauf 14 ausreichend hoch sind, um reduzierende Bedingungen im Dampferzeuger 18 zu gewährleisten. Dies bewirkt einen unnötig hohen Verbrauch von Hydrazin und erhöht die Kosten für den Anlagenbetrieb. Speziell bei Hydrazin kommt erschwerend hinzu, dass die Handhabung und Verwendung der Chemikalie durch gesetzliche Auflagen streng limitiert worden ist. Deshalb beträgt zum Beispiel die Konzentration von Hydrazinlösungen, die in Kernkraftwerken 10 gelagert und gehandhabt werden dürfen, teilweise nur noch 15 %.

Die Konzentration von Methanol und anderen niedermolekularen C, H, O-Verbindungen hingegen wird mittels handelsüblicher TOC-Durchflussmessgeräte 56, kontinuierlich im Speisewasser und in dem im Umlaufraum 48 des Dampferzeugers 18 zirkulierenden Umlaufwassers über Probenahmeleitungen 60, 61 gemessen.

Bevorzugt können diese kontinuierlichen Messungen durch zusätzliche, diskontinuierliche Analysenverfahren ergänzt werden, mit denen beispielsweise zwischen verschiedenen organischen Verbindungen differenziert werden kann.

Handelsübliche Analysegeräte und Analyseverfahren ermöglichen also die kontinuierliche Messung der Konzentration von Methanol und anderen, unter Einfluss von Gammastrahlung reduzierend wirkenden C, H, O-Verbindungen sowohl im Umlaufwasser als auch im Speisewasser.

Erfahrungen bei Industrieanlagen zeigen, dass Methanol in konventionellen Dampfkesseln selbst bei Temperaturen bis 530 °C und Drücken von 270 bar thermisch stabil ist Sind zusätzlich Oxidationsmittel in den konventionellen Dampfkesseln vorhanden, findet allerdings ein oxidativer Abbau von Methanol statt. Die rein thermische Zersetzung von Methanol im Umlaufwasser von Dampferzeugern 18 ist allerdings vernachlässigbar gering. Dies ermöglicht die Anpassung und Regelung der für den jeweiligen Anlagenbetriebszustand notwendigen Reduktionsmittelkonzentration im Speisewasser anhand des aktuellen Methanolverbrauchs im Dampferzeuger.

Bevorzugt wird daher durch kontinuierliche Messungen in Umlaufwasser und Speisewasser der aktuelle Methanolverbrauch im Dampferzeuger 18 durch Sauerstoffbindung und andere Radikalreaktionen bestimmt. Der Methanolgesamtumsatz im Dampferzeuger 18 setzt sich im Wesentlichen aus zwei Bestandteilen zusammen:
(1) Radiolytischer Abbau durch die auf der Sekundärseite des Dampferzeugers 18 einwirkende Gammastrahlung (Grundumsatz);
(2) Strahlungsinduzierter oxidativer Methanolabbau durch Sauerstoff oder andere oxidierend wirkende Substanzen im Dampferzeuger 18, wie zum Beispiel Kupferionen und Kupferoxide oder dreiwertige Eisenoxide und -hydroxide.

Durch die laufende Messung des Sauerstoffgehaltes im Hauptkondensat und im Speisewasser ist der Sauerstoffeintrag in die Dampferzeuger 18 bekannt. Durch Auswertung von Betriebsphasen mit erhöhtem Sauerstoffgehalt oder durch eine gezielte Erhöhung des Sauerstoffgehaltes im Speisewasser kann der Methanolverbrauch durch strahlungsinduzierte Oxidation genau bestimmt und so angepasst werden, dass reduzierende Bedingungen in den Dampferzeugern 18 stets gewährleistet sind. Dies ermöglicht die Einregelung von oxidativen Bedingungen im Dampf-Wasser-Kreislauf 14 außerhalb der Dampferzeuger 18 (AVT(O)-Betrieb) bei gleichzeitiger Sicherstellung von reduzierenden Bedingungen in den Dampferzeugern 18 (AVT(R)-Betrieb).

Wird zum Beispiel im Hauptkondensat und Speisewasser eine rasche und deutliche Zunahme der Sauerstoffkonzentration registriert, kann durch die Regelung sofort die Konzentration des Reduktionsmittels im Speisewasser und damit auch der Methanolumsatz im Dampferzeuger erhöht werden.

Die Signalsteuerung und -regelung kann auch in die Anlagenleittechnik integriert werden.

Die Verwendung von niedermolekularen C, H, O-Verbindungen als Reduktionsmittel ermöglicht somit unter anderem auch eine sehr genaue, bedarfsoptimierte Prozessüberwachung und -steuerung.

## Patentansprüche

1. Kernkraftwerk (10) mit einem Primärkühlmittelkreislauf (12), einem von dem Primärkühlmittelkreislauf (12) getrennten Dampf-Wasser-Kreislauf (14), und einem an den Primärkühlmittelkreislauf (12) und den Dampf-Wasser-Kreislauf (14) angeschlossenen Dampferzeuger (18) zur Übertragung von Wärme aus dem Primärkühlmittelkreislauf (12) in den Dampf-Wasser-Kreislauf (14), wobei der Dampf-Wasser-Kreislauf (14) wenigstens eine Dosierstelle (44) zum Eintragen eines Reduktionsmittels in den Dampf-Wasser-Kreislauf (14) aufweist, wobei das Reduktionsmittel eine aus Kohlenstoff, Wasserstoff und Sauerstoff bestehende organische Verbindung ist, **dadurch gekennzeichnet dass** der Dampf-Wasser-Kreislauf (14) Mittel (50, 56, 58) zur Steuerung der Konzentration des Reduktionsmittels aufweist, durch die im Dampf-Wasser-Kreislauf (14) eine vorbestimmte Sauerstoffkonzentration eingestellt wird, während innerhalb des Dampferzeugers (18) reduzierende Bedingungen herrschen.

2. Kernkraftwerk nach Anspruch 1, **dadurch gekennzeichnet, dass** das Reduktionsmittel unter Einwirkung von Gammastrahlung als Sauerstofffänger wirkt.

3. Kernkraftwerk nach einem der vorhergehenden Ansprüche, **dadurch gekennzeichnet, dass** das Reduktionsmittel aus der Gruppe bestehend aus C1-C6-Alkoholen, Aldehyden und Ketonen oder deren Mischungen ausgewählt ist.

4. Kernkraftwerk nach einem der vorhergehenden Ansprüche, **dadurch gekennzeichnet, dass** das Reduktionsmittel ein C1-C6-Alkohol, vorzugsweise Methanol ist.

5. Kernkraftwerk nach einem der vorhergehenden Ansprüche, **dadurch gekennzeichnet, dass** der Dampf-Wasser-Kreislauf (14) einen Kondensator (20) und eine Hauptkondensatpumpe (36) aufweist, und die Dosierstelle (44) zwischen dem Kondensator (20) und der Hauptkondensatpumpe (36) angeordnet ist.

6. Kernkraftwerk nach einem der vorhergehenden Ansprüche, **dadurch gekennzeichnet, dass** der Dampf-Wasser-Kreislauf (14) einen Speisewasserbehälter (22) aufweist, und die Dosierstelle (44) stromabwärts des Speisewasserbehälters (22) angeordnet ist.

7. Kernkraftwerk nach einem der vorhergehenden Ansprüche, **dadurch gekennzeichnet, dass** im Dampf-Wasser-Kreislauf (14) wenigstens eine Einrichtung (50) zur Messung der Reduktionsmittelkonzentration und/oder des Redox-Potentials vorgesehen ist.

8. Verfahren zum Betreiben eines Kernkraftwerks (10) gemäß Anspruch 1, wobei das Kernkraftwerk (10) einen Primärkühlmittelkreislauf (12), einen von dem Primärkühlmittelkreislauf (12) getrennten Dampf-Wasser-Kreislauf (14), und einen an den Primärkühlmittelkreislauf (12) und den Dampf-Wasser-Kreislauf (14) angeschlossenen Dampferzeuger (18) zur Übertragung von Wärme aus dem Primärkühlmittelkreislauf (12) in den Dampf-Wasser-Kreislauf (14) umfasst, wobei ein aus Kohlenstoff, Wasserstoff und Sauerstoff bestehendes organisches Reduktionsmittel in den Dampf-Wasser-Kreislauf (14) eingetragen wird, **dadurch gekennzeichnet dass** die Konzentration des Reduktionsmittels so gesteuert wird, dass im Dampf-Wasser-Kreislauf (14) eine vorbestimmte Sauerstoffkonzentration von vorzugsweise höchstens 0,1 mg/kg eingestellt wird, während innerhalb des Dampferzeugers (18) reduzierende Bedingungen herrschen.

9. Verfahren nach Anspruch 8, **dadurch gekennzeichnet, dass** im Dampf-Wasser-Kreislauf (14) ein pH-Wert von größer als 7 eingestellt wird.

10. Verfahren nach einem der Ansprüche 8 oder 9, **dadurch gekennzeichnet, dass** eine kontinuierliche Messung der Reduktionsmittelkonzentration erfolgt.

11. Verfahren nach einem der Ansprüche 8 bis 10, **dadurch gekennzeichnet, dass** der Reduktionsmittelverbrauch im Dampferzeuger (18) kontinuierlich bestimmt wird.

12. Verfahren nach einem der Ansprüche 8 bis 11, **dadurch gekennzeichnet, dass** der Dampf-Wasser-Kreislauf (14) einen Speisewasserabschnitt (40) und einen Hauptkondensatabschnitt (34) umfasst, wobei der Sauerstoffgehalt im Hauptkondensat und/oder im Speisewasser analysiert und als Regelgröße für die Reduktionsmittelkonzentration verwendet wird.

13. Verfahren nach Anspruch 8 oder 12, **dadurch gekennzeichnet, dass** der Dampferzeuger (18) einen Umlaufraum (48) aufweist, in dem Umlaufwasser zur Aufnahme von Wärme aus dem Primärkühlmittelkreislauf (12) zirkuliert, wobei die Konzentration des Reduktionsmittels im Umlaufwasser in einem Bereich von 10E-7 mol/kg bis 10E-3 mol/kg, bevorzugt von 3x10E-7 bis 3x10E-4 mol/kg liegt.

14. Verfahren nach einem der Ansprüche 8 bis 13, **dadurch gekennzeichnet, dass** der Dampf-Wasser-Kreislauf (14) einen Speisewasserabschnitt (40) mit einem Speisewasserzulauf (54) aufweist, und dass der Dampferzeuger (18) einen Umlaufraum (48) umfasst, in dem Umlaufwasser zur Aufnahme von Wärme aus dem Primärkühlmittelkreislauf (12) zirkuliert, wobei die Reduktionsmittelkonzentration im Speisewasser und/oder im Umlaufwasser mit TOC-Durchflussmessgeräten (56) bestimmt wird.

15. Verfahren nach einem der Ansprüche 8 bis 14, **dadurch gekennzeichnet, dass** der Dampf-Wasser-Kreislauf (14) einen Umlaufraum (48) umfasst, wobei mittels eines Potentialmessfühlers (58) im Umlaufwasser des Dampferzeugers (18) das Redox- und/oder Korrosionspotential gemessen wird.

16. Verfahren nach einem der Ansprüche 8 bis 15, **dadurch gekennzeichnet, dass** der Dampf-Wasser-Kreislauf (14) einen Umlaufraum (48) umfasst, wobei das Redox-Potential im Umlaufwasser kontinuierlich gemessen und als Regelgröße für die Reduktionsmitteldosierung verwendet wird.

17. Verfahren nach einem der Ansprüche 8 bis 16, **dadurch gekennzeichnet, dass** das Redox- und/oder Korrosionspotential zur Einregelung oxidierender Bedingungen im Dampf-Wasser-Kreislauf (14) und gleichzeitig das Redox- und/oder Korrosionspotential im Umlaufwasser des Dampferzeugers (18) zur Einregelung reduzierender Bedingungen gemessen wird.

18. Verwendung des Verfahrens nach einem der Ansprüche 8 bis 17 zur Stillstandskonservierung des Dampferzeugers (18), **dadurch gekennzeichnet, dass** die Konzentration des Reduktionsmittels im Dampferzeugerwasser in einem Bereich von 5x10E-6 mol/kg bis 5x10E-2 mol/kg liegt.

## Claims

1. A nuclear power plant (10) having a primary coolant circuit (12), a steam-water circuit (14) separated from the primary coolant circuit (12), and a steam generator (18) connected to the primary coolant circuit (12) and the steam-water circuit (14) for the transfer of heat from the primary coolant circuit (12) into the steam-water circuit (14), wherein the steam-water circuit (14) has at least one metering point (44) for the introduction of a reducing agent into the steam-water circuit (14),
wherein the reducing agent is an organic compound consisting of carbon, hydrogen and oxygen,
**characterized in that** the steam-water circuit (14) has means (50, 56, 58) for controlling the concentration of the reducing agent, by means of which a predetermined oxygen concentration is set in the steam-water circuit (14), while reducing conditions prevail within the steam generator (18).

2. The nuclear power plant according to Claim 1, **characterized in that** the reducing agent acts as an oxygen scavenger under the influence of gamma radiation.

3. The nuclear power plant according to any one of the preceding claims, **characterized in that** the reducing agent is selected from the group consisting of C1-C6 alcohols, aldehydes and ketones or mixtures thereof.

4. The nuclear power plant according to any one of the preceding claims, **characterized in that** the reducing agent is a C1-C6 alcohol, preferably methanol.

5. The nuclear power plant according to any one of the preceding claims, **characterized in that** the steam-water circuit (14) comprises a condenser (20) and a main condensate pump (36), and the metering point (44) is arranged between the condenser (20) and the main condensate pump (36).

6. The nuclear power plant according to any one of the preceding claims, **characterized in that** the steam-water circuit (14) comprises a feed water container (22), and the metering point (44) is arranged downstream of the feed water container (22).

7. The nuclear power plant according to any one of the preceding claims, **characterized in that** at least one device (50) for measuring the reducing agent concentration and/or the redox potential is provided in the steam-water circuit (14).

8. A method for operating a nuclear power plant (10) according to Claim 1,
wherein the nuclear power plant (10) comprises a primary coolant circuit (12), a steam-water circuit (14) separated from the primary coolant circuit (12), and a steam generator (18) connected to the primary coolant circuit (12) and the steam-water circuit (14) for the transfer of heat from the primary coolant circuit (12) into the steam-water circuit (14),
wherein an organic reducing agent consisting of carbon, hydrogen and oxygen is introduced into the steam-water circuit (14), **characterized in that** the concentration of the reducing agent is controlled such that a predetermined oxygen concentration of preferably at most 0.1 mg/kg is set in the steam-water circuit (14) while reducing conditions prevail within the steam generator (18).

9. The method according to Claim 8, **characterized in that** a pH value of greater than 7 is set in the steam-water circuit (14).

10. The method according to any one of Claims 8 or 9, **characterized in that** a continuous measurement of the reducing agent concentration takes place.

11. The method according to any one of Claims 8 to 10, **characterized in that** the reducing agent consumption in the steam generator (18) is continuously determined.

12. The method according to any one of Claims 8 to 11, **characterized in that** the steam-water circuit (14) comprises a feed water section (40) and a main condensate section (34), wherein the oxygen content in the main condensate and/or in the feed water is analyzed and is used as a control variable for the reducing agent concentration.

13. The method according to Claim 8 or 12, **characterized in that** the steam generator (18) has a circulation space (48), in which circulating water for receiving heat from the primary coolant circuit (12) circulates, wherein the concentration of the reducing agent in the circulating water is in a range from 10E-7 mol/kg to 10E-3 mol/kg, preferably from 3x10E-7 to 3x10E-4 mol/kg.

14. The method according to any one of Claims 8 to 13, **characterized in that** the steam-water circuit (14) has a feed water section (40) with a feed water feed (54), and that the steam generator (18) comprises a circulation space (48), in which circulating water for receiving heat from the primary coolant circuit (12) circulates, wherein the reducing agent concentration in the feed water and/or in the circulating water is determined by using TOC flow meters (56).

15. The method according to any one of Claims 8 to 14, **characterized in that** the steam-water circuit (14) comprises a circulation space (48), wherein the redox- and/or corrosion potential in the circulating water of the steam generator (18) is measured by means of a potential measuring probe (58).

16. The method according to any one of Claims 8 to 15, **characterized in that** the steam-water circuit (14) comprises a circulation space (48), wherein the redox potential in the circulating water is continuously measured and is used as a control variable for the reducing agent metering.

17. The method according to any one of Claims 8 to 16, **characterized in that** the redox- and/or corrosion potential is measured in order to regulate oxidizing conditions in the steam-water circuit (14) and at the same time the redox- and/or corrosion potential in the circulating water of the steam generator (18) is measured in order to regulate reducing conditions.

18. A use of the method according to any one of Claims 8 to 17 for the standstill preservation of the steam generator (18), **characterized in that** the concentration of the reducing agent in the steam generator water is in a range from 5x10E-6 mol/kg to 5x10E-2 mol/kg.

## Revendications

1. Centrale nucléaire (10) avec un circuit de fluide de refroidissement primaire (12), un circuit vapeur-eau (14) séparé du circuit de fluide de refroidissement primaire (12) et un générateur de vapeur (18) raccordé au circuit de fluide de refroidissement primaire (12) et au circuit vapeur-eau (14), pour la transmission de la chaleur du circuit de fluide de refroidissement primaire (12) vers le circuit vapeur-eau (14), dans lequel le circuit vapeur-eau (14) comprend au moins un point de dosage (44) pour l'introduction d'un agent réducteur dans le circuit vapeur-eau (14), dans lequel l'agent réducteur est un composé organique constitué de carbone, d'hydrogène et d'oxygène, **caractérisée en ce que** le circuit vapeur-eau (14) comprend des moyens (50, 56, 58) pour le contrôle de la concentration de l'agent réducteur, au moyen desquels une concentration en oxygène prédéterminée est ajustée dans le circuit vapeur-eau (14), tandis que des conditions réductrices règnent à l'intérieur du générateur de vapeur (18).

2. Centrale nucléaire selon la revendication 1, **caractérisée en ce que** l'agent réducteur agit, sous l'effet d'un rayonnement gamma, comme un fixateur d'oxygène.

3. Centrale nucléaire selon l'une des revendications précédentes, **caractérisée en ce que** l'agent réducteur est sélectionné dans le groupe constitué d'alcools C1 - C6, d'aldéhydes et de cétones ou de mélanges de ceux-ci.

4. Centrale nucléaire selon l'une des revendications précédentes, **caractérisée en ce que** l'agent réducteur est un alcool C1 - C6, de préférence du méthanol.

5. Centrale nucléaire selon l'une des revendications précédentes, **caractérisée en ce que** le circuit vapeur-eau (14) comprend un condensateur (20) et une pompe de condensat principal (36) et le point de dosage (44) est disposé entre le condensateur (20) et la pompe de condensat principal (36).

6. Centrale nucléaire selon l'une des revendications précédentes, **caractérisée en ce que** le circuit vapeur-eau (14) comprend un réservoir d'eau d'alimentation (22) et le point de dosage (44) est disposé en aval du réservoir d'eau d'alimentation (22).

7. Centrale nucléaire selon l'une des revendications précédentes, **caractérisée en ce qu'**au moins un dispositif (50) pour la mesure de la concentration en agent réducteur et/ou du potentiel redox est prévu dans le circuit vapeur-eau (14).

8. Procédé de commande d'une centrale nucléaire (10) selon la revendication 1, dans lequel la centrale nucléaire (10) comprend un circuit de fluide de refroidissement primaire (12), un circuit vapeur-eau (14) séparé du circuit de fluide de refroidissement primaire (12) et un générateur de vapeur (18) raccordé au circuit de fluide de refroidissement primaire (12) et au circuit vapeur-eau (14), pour la transmission de la chaleur du circuit de fluide de refroidissement primaire (12) vers le circuit vapeur-eau (14), dans lequel un agent réducteur organique constitué de carbone, d'hydrogène et d'oxygène est introduit dans le circuit vapeur-eau (14), **caractérisée en ce que** la concentration en agent réducteur est contrôlée de façon à ce qu'une concentration en oxygène de préférence au maximum de 0,1 mg/kg soit ajustée dans le circuit vapeur-eau (14), tandis que des conditions réductrices règnent à l'intérieur du générateur de vapeur (18).

9. Procédé selon la revendication 8, **caractérisé en ce que** le pH est ajusté à une valeur supérieure à 7 dans le circuit vapeur-eau (14).

10. Procédé selon l'une des revendications 8 ou 9, **caractérisé en ce que** la concentration en agent réducteur est mesurée de manière continue.

11. Procédé selon l'une des revendications 8 à 10, **caractérisé en ce que** la consommation en agent réducteur dans le générateur de vapeur (18) est déterminée de manière continue.

12. Procédé selon l'une des revendications 8 à 11, **caractérisé en ce que** le circuit vapeur-eau (14) comprend une section d'eau d'alimentation (40) et une section de condensat principal (34), dans laquelle la teneur en oxygène dans le condensat principal et/ou dans l'eau d'alimentation est analysée et est utilisée en tant que grandeur de régulation pour la concentration en agent réducteur.

13. Procédé selon la revendication 8 ou 12, **caractérisé en ce que** le générateur de vapeur (18) comprend un espace de circulation (48) dans lequel de l'eau en circulation circule pour l'absorption de la chaleur du circuit de fluide de refroidissement primaire (12), dans lequel la concentration en agent réducteur dans l'eau en circulation est de l'ordre de 10E-7 mol/kg à 10E-3 mol/kg, de préférence de 3x10E-7 à 3x10E-4 mol/kg.

14. Procédé selon l'une des revendications 8 à 13, **caractérisé en ce que** le circuit vapeur-eau (14) comprend une section d'eau d'alimentation (40) avec une conduite d'eau d'alimentation (54) et **en ce que** le générateur de vapeur (18) comprend un espace de circulation (48) dans lequel l'eau en circulation circule pour l'absorption de la chaleur du circuit de fluide de refroidissement primaire (12), dans lequel la concentration en agent réducteur dans l'eau d'alimentation et/ou dans l'eau en circulation est déterminée avec des appareils de mesure de débit TOC (56).

15. Procédé selon l'une des revendications 8 à 14, **caractérisé en ce que** le circuit vapeur-eau (14) comprend un espace de circulation (48), le potentiel redox et/ou de corrosion étant mesuré dans l'eau de circulation du générateur de vapeur (18) au moyen d'une sonde de mesure de potentiel (58).

16. Procédé selon l'une des revendications 8 à 15, **caractérisé en ce que** le circuit vapeur-eau (14) comprend un espace de circulation (48), le potentiel redox dans l'eau en circulation étant mesuré en continu et utilisé en tant que grandeur de régulation pour le dosage de l'agent réducteur.

17. Procédé selon l'une des revendications 8 à 16, **caractérisé en ce que** le potentiel redox et/ou de corrosion est mesuré pour le réglage de conditions oxydantes dans le circuit vapeur-eau (14) et, en même temps, le potentiel redox et/ou de corrosion dans l'eau en circulation du générateur de vapeur (18) est mesuré pour le réglage de conditions réductrices.

18. Utilisation du procédé selon l'une des revendications 8 à 17 pour la conservation à l'arrêt du générateur de vapeur (18), **caractérisée en ce que** la concentration de l'agent réducteur dans l'eau du générateur de vapeur est de l'ordre de 5x10E-6 mol/kg à 5x10E-2 mol/kg.
